# EUROPÄISCHE PATENTSCHRIFT

(11) **EP 2 022 158 B1**
(45) Veröffentlichungstag und Bekanntmachung des Hinweises auf die Patenterteilung: **26.03.2014**
(21) Anmeldenummer: 07724628.8
(22) Anmeldetag: 26.04.2007
(51) Int. Cl.: H02K 1/27

(54) **ELEKTRISCHE SYNCHRONMASCHINE**
ELECTRICAL SYNCHRONOUS MACHINE
MACHINE SYNCHRONE ÉLECTRIQUE

(30) Priorität: 31.05.2006 DE 102006026593
(43) Veröffentlichungstag der Anmeldung: 11.02.2009
(73) Patentinhaber: GETRAG Getriebe- und Zahnradfabrik Hermann Hagenmeyer GmbH & Cie KG, 74199 Untergruppenbach (DE)
(72) Erfinder: BLESSING, Uli, Christian, 74078 Heilbronn (DE); KREIM, Alexander, 74626 Bretzfeld-Waldbach (DE); KNOEDEL, Ulrich, 74379 Ingersheim (DE); BECK, Matthias, 74074 Heilbronn (DE)
(74) Vertreter: Steil, Christian
(86) Internationale Anmeldenummer: PCT/EP2007/003698
(87) Internationale Veröffentlichungsnummer: WO 2007/137657

(56) Entgegenhaltungen:
- EP-A1- 0 511 796
- EP-A1- 1 239 570
- WO-A-2004/107539
- DE-A1- 3 323 297
- DE-A1- 3 420 370
- DE-A1- 3 609 835
- DE-A1- 19 743 314
- DE-U1- 8 419 864

## Beschreibung

Die vorliegende Erfindung betrifft eine elektrische Synchronmaschine, gemäß dem Oberbegriff des Anspruchs 1, wie aus DE 197 43 314 A1 bekannt, insbesondere zur Verwendung als Antriebseinheit in kraftfahrzeugtechnischen Anwendungen, mit einem Stator, der eine elektrische Wicklungsanordnung zur Erzeugung eines Drehfeldes aufweist, und mit einem Rotor, der Magnetflusserzeugungsmittel zum Erzeugen eines Rotorflusses aufweist, mit dem das Drehfeld in Wechselwirkung tritt.

Bei herkömmlichen Synchronmaschinen wird der Rotorfluss durch Pole erzeugt, die mit Gleichstromspulen magnetisiert werden. Der Erregerstrom wird dabei in der Regel über Schleifringe auf den Rotor übertragen.

Das von der Statorwicklung erzeugte Drehfeld wird bei herkömmlichen Synchronmaschinen durch die drei Phasen von Drehstrom erzeugt.

Der Rotorfluss kann jedoch auch durch Permanentmagnete erzeugt werden. Eine solche Synchronmaschine kann schleifringlos aufgebaut werden. Die Versorgung der Statorwicklung erfolgt dabei in der Regel aus einer Steuer- und Leistungselektronik, die z.B. aus einem Gleichspannungsnetz (wie beispielsweise einem elektrischen Fahrzeugnetz) versorgt wird. Derartige Maschinen werden auch als elektronisch kommutierte Gleichstrommaschinen oder EC-Motoren bezeichnet. Diese Motoren können eine hohe Lebensdauer besitzen, sind in der Regel wartungsfrei und können in einer hohen Schutzart ausgeführt werden. Mittels der elektronischen Steuerung ist in der Regel eine stufenlose Drehzahlreglung möglich.

Synchronmaschinen sind in der Regel auf eine bestimmte Nenndrehzahl ausgelegt. Der von den Magnetflusserzeugungsmitteln erzeugte Rotorfluss wird bei größeren Drehzahlen als die Nenndrehzahl durch eine elektrische Feldschwächung verringert.

Permanentmagnetisch erregte Synchronmaschinen sind in der Regel auf ein hohes Drehmoment ausgelegt. In diesem Fall ist der Rotorfluss in der Regel vergleichsweise hoch. Alternativ lassen sich solche Maschinen auch für eine hohe Drehzahl auslegen, wobei der Rotorfluss dann in der Regel geringer ist.

Aufgrund des konstanten Rotorflusses ist das System jedoch generell auf einen bestimmten Nennbetriebspunkt festgelegt. Bei darüber hinaus ansteigenden Drehzahlen wird die elektrische Feldschwächung so groß, dass nur ein relativ kleiner Teil der in die Wicklungsanordnung des Stators gespeisten Leistung als Antriebsleistung zur Verfügung steht. Einen Bereich sehr hoher Drehzahlen kann man daher in der Regel nicht mehr nutzen. Dies gilt insbesondere bei Synchronmaschinen, bei denen ein hoher Rotorfluss durch entsprechend ausgelegte Magnetflusserzeugungsmittel (Permanentmagnete beispielsweise) erzeugt wird. Wenn man höhere Drehzahlen, insbesondere einen größeren nutzbaren Drehzahlbereich erzeugen möchte, lässt sich dies in der Regel nur mit einem geringeren Rotorfluss realisieren. Dies hat jedoch zur Folge, dass das maximale Drehmoment reduziert wird.

Aus der DE 36 09 835 A1 ist ein Einphasenmotor mit einem Permanentmagnetrotor und einem elektromagnetisch erregten Stator bekannt, wobei der Rotor zwei in axialem Abstand voneinander drehfest auf der Rotorwelle sitzende Permanentmagnetscheiben mit quer zur Rotorachse ausgerichteten und zueinander parallelen Magnetisierungsrichtungen aufweist.

Aus der DE 34 20 370 C2 ist ein weiterer Einphasenmotor bekannt, mit einem zweiteilig ausgebildeten Rotor, der ein freidrehend auf einer Antriebswelle gelagertes permanentmagnetisches Rotorinnenteil und ein elektrisch leitfähiges Rotoraußenteil aufweist.

Das Dokument DE 33 23 297 C2 offenbart einen Induktionsmotor mit geringer Trägheit, wobei zwischen Stator und Rotor ein Joch angeordnet ist, das drehbar in einem Rahmen des Stators gelagert und mit Lüfterflügeln versehen ist.

Es ist die Aufgabe der Erfindung, eine verbesserte Synchronmaschine anzugeben.

Diese Aufgabe wird durch eine elektrische Synchronmaschine gemäß Anspruch 1 gelöst.

Die erfindungsgemäße Synchronmaschine kann einen großen Drehzahlbereich abdecken und ein vergleichsweise hohes maximales Drehmoment aufbringen.

Bei der erfindungsgemäßen elektrischen Synchronmaschine weist der Rotor einen ersten Rotorabschnitt mit ersten Magnetflusser-zeugungsmitteln und einen zweiten Rotorabschnitt mit Magnetflussbeeinflussungsmitteln auf, wobei die zwei Rotorabschnitte zwischen wenigstens einer ersten und einer zweiten Relativposition relativ zueinander bewegbar sind, derart, dass der von dem Rotor bereitgestellte Rotorfluss in den zwei Relativpositionen unterschiedlich groß ist.

Durch die erfindungsgemäße Ausgestaltung einer Synchronmaschine kann folglich der Rotorfluss mechanisch variiert werden. Indem veranlasst wird, dass die zwei Rotorabschnitte entweder in der ersten oder in der zweiten Relativposition angeordnet sind, kann entweder ein höherer oder ein niedrigerer Rotorfluss bereitgestellt werden, so dass die eine Relativposition für hohe Drehzahlen und die andere Relativposition für hohe Drehmomente ausgelegt ist.

Der erste Rotorabschnitt erzeugt dabei einen Rotorfluss. Der von den Magnetflusserzeugungsmitteln des ersten Rotorabschnittes erzeugte Rotorfluss kann mittels der Magnetflussbeeinflussungsmittel so beeinflusst werden, dass der von dem Rotor insgesamt bereitgestellte Rotorfluss in den zwei Relativpositionen unterschiedlich groß ist.

Demzufolge kann die erfindungsgemäße Synchronmaschine sowohl mit hohen Drehzahlen betrieben werden, kann aber auch ein hohes Drehmoment bereitstellen.

Generell können die zwei Rotorabschnitte ausschließlich zwischen einer ersten und einer zweiten Relativposition relativ zueinander bewegbar sein. Es ist jedoch auch möglich, die zwei Rotorabschnitte zwischen einer Mehrzahl von Relativpositionen relativ zueinander bewegbar auszugestalten. Auch ist es denkbar, die zwei Rotorabschnitte zwischen zwei Relativpositionen kontinuierlich verstellbar auszubilden, so dass eine unendliche Anzahl von Relativpositionen einrichtbar ist.

Die Magnetflussbeeinflussungsmittel des zweiten Rotorabschnittes können als Magnetflussdämpfungsmittel ausgebildet sein, die in der einen Relativposition mehr und in der anderen Relativposition weniger zur Geltung kommen.

Besonders bevorzugt ist es jedoch, wenn die Magnetflussbeeinflussungsmittel des zweiten Rotorabschnittes durch zweite Magnetflusserzeugungsmittel gebildet sind.

Auf diese Weise kann der von dem zweiten Rotorabschnitt eingenommene Bauraum dazu benutzt werden, einen zusätzlichen Magnetfluss bereitzustellen, der sich mit dem Magnetfluss überlagert, der von den ersten Magnetflusserzeugungsmitteln bereitgestellt wird. Daher kann bei dem insgesamt verwendeten Bauraum in einer der zwei Relativpositionen ein vergleichsweise hoher Rotorfluss bereitgestellt werden.

Auch ist es generell denkbar, dass die ersten und/oder die zweiten Magnetflusserzeugungsmittel von schleifringgespeisten Gleichstromspulen gebildet sind, also eine Elektromagnetanordnung aufweisen.

Von besonderem Vorzug ist es jedoch, wenn die ersten und/oder die zweiten Magnetflusserzeugungsmittel jeweils eine Permanentmagnetanordnung aufweisen.

Bei dieser Ausführungsform kann die elektrische Synchronmaschine schleifringlos ausgebildet sein.

Generell ist es auch denkbar, dass die ersten und/oder die zweiten Magnetflusserzeugungsmittel sowohl eine Elektromagnetanordnung als auch eine Permanentmagnetanordnung aufweisen, also gemischte Mittel zur Magnetflusserzeugung besitzen.

Gemäß einer weiteren bevorzugten Ausführungsform sind die Permanentmagnetanordnungen so an dem ersten bzw. dem zweiten Rotorabschnitt angeordnet, dass der Rotorfluss bei der Relativbewegung durch Verändern der Flussdichte verändert wird.

Der Rotorfluss stellt sich aus der Sicht des Stators im Wesentlichen als der Rotorfluss im Luftspalt dar. Dieser lässt sich vereinfacht berechnen durch φ = B • Q, wobei B die Flussdichte im Luftspalt ist und wobei Q die wirksame Querschnittsfläche im Luftspalt ist.

Bei der vorliegenden Ausführungsform wird der Rotorfluss im Wesentlichen durch Verändern der Flussdichte verändert, wobei die Querschnittsfläche im Wesentlichen konstant sein kann.

Gemäß einer alternativen Ausführungsform sind die Permanentmagnetanordnungen an dem ersten bzw. dem zweiten Rotorabschnitt so angeordnet, dass der Rotorfluss bei der Relativbewegung durch Verändern der Luftspaltfläche verändert wird.

Bei dieser Ausführungsform kann die Flussdichte im Wesentlichen konstant bleiben, die Änderung wird im Wesentlichen durch die Veränderung der effektiven Querschnittsfläche bewirkt.

Insgesamt ist es ferner bevorzugt, wenn der erste Rotorabschnitt und der zweite Rotorabschnitt radial ineinander verschachtelt angeordnet sind.

Eine derartige bauliche Anordnung lässt sich in der Regel konstruktiv vergleichsweise einfach realisieren.

Gemäß einer weiteren bevorzugten Ausführungsform sind der erste Rotorabschnitt und der zweite Rotorabschnitt koaxial zueinander angeordnet.

Auf diese Weise können Unwuchten aufgrund der Relativbewegung vermieden werden.

Insgesamt ist es ferner vorteilhaft, wenn die erste bzw. die zweite Relativposition eingerichtet werden, indem der erste und der zweite Rotorabschnitt gegeneinander verdreht werden.

Vorzugsweise erfolgt die Verdrehung dabei um eine gemeinsame Drehachse.

Eine solche mechanische Verstellung lässt sich konstruktiv günstig realisieren.

Ferner ist es vorteilhaft, wenn der erste und der zweite Rotorabschnitt jeweils Magnetflusserzeugungsmittel mit einer ersten bzw. zweiten Anzahl von Polen aufweisen, deren Quotient eine ganze Zahl ist.

Generell ist es zwar auch möglich, Rotorabschnitte vorzusehen, deren Polzahl einen nicht ganzzahligen Quotienten ergeben. Wenn der Quotient ganzzahlig ist, können Drehzahlschwankungen oder Unwuchtproblematiken von vorneherein vermieden werden.

Von besonderem Vorteil ist es, wenn die erste und die zweite Polzahl identisch sind.

Auf diese Weise kann der zur Verfügung stehende Bauraum in optimaler Weise ausgenutzt werden.

Gemäß einer weiteren bevorzugten Ausführungsform sind der erste und der zweite Rotorabschnitt um einen Winkel gegeneinander verdrehbar, der kleiner gleich 360° geteilt durch die größere bzw. gemeinsame Polzahl ist.

Auf diese Weise kann der Verstellbereich eingegrenzt werden, was eine vergleichsweise einfache Aktuatorik ermöglicht. Ein größerer Verstellbereich ist zudem in der Regel nicht sinnvoll, da sich die elektromagnetischen Verhältnisse in Umfangsrichtung wiederholen.

Ferner ist vorzugsweise ein Rotoraktuator vorgesehen, der die Relativbewegung zwischen den zwei Rotorabschnitten erzeugt.

Durch Bereitstellen eines speziellen Rotoraktuators kann die Umschaltung von der einen Relativposition in die andere Relativposition gezielt mittels einer übergeordneten Steuerelektronik erfolgen.

Vorzugsweise ist der Rotoraktuator ein Fluidaktuator, insbesondere ein Fluiddrehsteller.

Da insbesondere in kraftfahrzeugtechnischen Anwendungen häufig fluidische Antriebe realisiert werden, kann in diesem Umfeld in der Regel auf vorhandene Ressourcen zurückgegriffen werden.

Alternativ hierzu ist es auch möglich, dass der Rotoraktuator ein elektromotorischer Aktuator ist. Generell ist es auch denkbar, einen elektromagnetischen Aktuator vorzusehen, wobei in diesem Fall die Wirkung eines solchen Aktuators auf den Rotorfluss berücksichtigt werden kann.

Ferner ist es vorteilhaft, wenn der erste und der zweite Rotorabschnitt zumindest in einer der zwei Relativpositionen mittels einer Rasteinrichtung gehalten sind.

Da die Änderung des Rotorflusses durch Überlagerung von Magnetkräften erfolgt, wirken zumindest in einer der zwei Relativpositionen zwischen den Rotorabschnitten magnetische Abstoßungskräfte. Durch eine Rasteinrichtung kann gewährleistet werden, dass die eingestellte Relativposition beibehalten wird.

Generell ist es möglich, die Rasteinrichtung durch mechanische Rastmittel (Kugelraste, etc.) zu realisieren.

Bevorzugt ist jedoch eine elektromagnetische Rastierung.

Erfindungsgemäß liegen sich in einer der zwei Relativpositionen identische Magnetpole des ersten bzw. des zweiten Rotorabschnittes gegenüber, wobei ein für diese Relativposition eingerichteter mechanischer Endanschlag um einen kleinen Winkelbetrag versetzt angeordnet ist, so dass sich die identischen Magnetpole nicht exakt gegenüberliegen und die magnetischen Abstoßungskräfte einen Rotorabschnitt gegen den Endanschlag drücken.

Auf diese Weise werden die magnetischen Abstoßungskräfte dazu genutzt, um die Rotorabschnitte ohne Energiezufuhr von außen in dieser Relativposition zu halten.

Gemäß einer weiteren bevorzugten Ausführungsform liegen sich in einer der zwei Relativpositionen entgegengesetzte Magnetpole des ersten bzw. des zweiten Rotorabschnittes gegenüber, so dass die Rotorabschnitte aufgrund der magnetischen Anziehungskräfte in dieser Relativposition gehalten werden.

In dieser Relativposition sind daher generell keine Rastmittel notwendig. Insbesondere ist keine Energiezufuhr notwendig, um die Rotorabschnitte in dieser Relativposition zu halten.

Alternativ können jedoch ebenfalls elektromagnetische Rastmittel vorgesehen werden, beispielsweise dadurch, dass die Rotorabschnitte auch in dieser Relativposition etwas versetzt zueinander sind, so dass die magnetischen Anziehungskräfte die Rotorabschnitte gegen einen entsprechend vorgesehenen mechanischen Endanschlag drücken.

Insgesamt ist es ferner vorteilhaft, wenn zwischen dem ersten und dem zweiten Rotorabschnitt ein Zwischenglied aus einem nicht magnetischen reibungsarmen Material angeordnet ist.

Auf diese Weise können die Rotorabschnitte mit relativ geringem energetischem Aufwand gegeneinander bewegt werden. Ferner wird die Problematik vermieden, dass Magnete aneinander anhaften.

Von besonderem Vorteil ist es dabei, wenn das Zwischenglied eine Zwischenhülse ist, das sich auf einfache Weise zwischen zwei konzentrischen Rotorabschnitten aufnehmen lässt.

Die Zwischenhülse kann beispielsweise aus einem Kunststoffmaterial hergestellt sein oder auch aus einem nicht magnetischen Metall.

Gemäß einer weiteren bevorzugten Ausführungsform sind die ersten und/oder die zweiten Magnetflusserzeugungsmittel so ausgebildet, dass eine Gesamtpolzahl des Rotors verstellbar ist.

Auf diese Weise kann die elektrische Synchronmaschine bspw. mit einer ersten Polzahl oder mit einer zweiten Polzahl betrieben werden, was für einige Anwendungsfälle vorteilhaft sein kann.

Ferner ist es insgesamt bevorzugt, wenn bei einer elektrischen Synchronmaschine nach Anspruch 1 der Rotorfluss mechanisch einstellbar ist.

Insgesamt kann so mit der erfindungsgemäßen Synchronmaschine eine mechanische Beeinflussung des Rotorflusses erzielt werden, so dass ein weiterer Freiheitsgrad geschaffen wird, der sinnvoll benutzt werden kann, um die Synchronmaschine zu optimieren, beispielsweise den Drehzahlbereich zu vergrößern, den Wirkungsgrad zu erhöhen bzw. das maximale Drehmoment zu verbessern.

Die mechanische Verstellung der Rotorabschnitte kann vorzugsweise so erfolgen, dass für einen Verstellvorgang lediglich kurzfristig Energie aufgebracht werden muss, und dass hiernach ein Betrieb der Synchronmaschine dauerhaft ohne weitere separate Energiezufuhr erfolgen kann.

Ausführungsbeispiele der Erfindung sind in der Zeichnung dargestellt und werden in der nachfolgenden Beschreibung näher erläutert. Es zeigen:
- Figur 1: eine schematische Längsschnittansicht durch eine Synchronmaschine gemäß einer ersten Ausführungsform der vorliegenden Erfindung;
- Figur 2: eine Querschnittsansicht einer Doppelrotoranordnung für eine erfindungsgemäße Synchronmaschine gemäß einer weiteren Ausführungsform der vorliegenden Erfindung;
- Figur 3a: eine schematische Abwicklung eines Ausschnittes einer Doppelrotoranordnung gemäß einer weiteren Ausführungsform der vorliegenden Erfindung in einer ersten Relativposition;
- Figur 3b: eine schematische Abwicklung eines Ausschnittes einer Doppelrotoranordnung gemäß einer weiteren Ausführungsform der vorliegenden Erfindung in einer zweiten Relativposition;
- Figur 4a: eine schematische Abwicklung eines Ausschnittes einer Doppelrotoranordnung gemäß einer weiteren Ausführungsform der vorliegenden Erfindung in einer ersten Relativposition;
- Figur 4b: eine schematische Abwicklung eines Ausschnittes einer Doppelrotoranordnung gemäß einer weiteren Ausführungsform der vorliegenden Erfindung in einer zweiten Relativposition;
- Figur 5: eine schematische Darstellung einer Doppelrotoranordnung mit einem Fluidaktuator zum Einrichten der zwei Relativpositionen;
- Figur 6: ein Diagramm von Drehmoment über Drehzahl einer Synchronmaschine gemäß der vorliegenden Erfindung;
- Figur 7: eine Darstellung von zwei Relativpositionen einer Doppelrotoranordnung, wie sie in Figur 3 gezeigt ist;
- Figur 8: eine der Figur 7 entsprechende Darstellung einer abgewandelten Ausführungsform einer Doppelrotoranordnung;
- Figur 9: eine Darstellung des Rotorflusses in zwei Relativpositionen bei einer Doppelrotoranordnung, die jener der Figur 4 vergleichbar ist; und
- Figur 10: ein der Figur 2 vergleichbare Darstellung einer Doppelrotoranordnung für eine erfindungsgemäße Synchronmaschine gemäß einer weiteren Ausführungsform der vorliegenden Erfindung;
- Figur 11: ein Diagramm von elektrischem Strom der Synchronmaschine über der Drehzahl der Synchronmaschine, und zwar verschiedene Stromverläufe jeweils mit und ohne mechanische Feldschwächung;
- Figur 12: eine schematische Abwicklung eines Ausschnittes einer Doppelrotoranordnung gemäß einer weiteren Ausführungsform der vorliegenden Erfindung in einer ersten Relativposition (12a) und einer zweiten Relativposition (12b); und
- Figur 13: eine weitere alternative Doppelrotoranordnung.

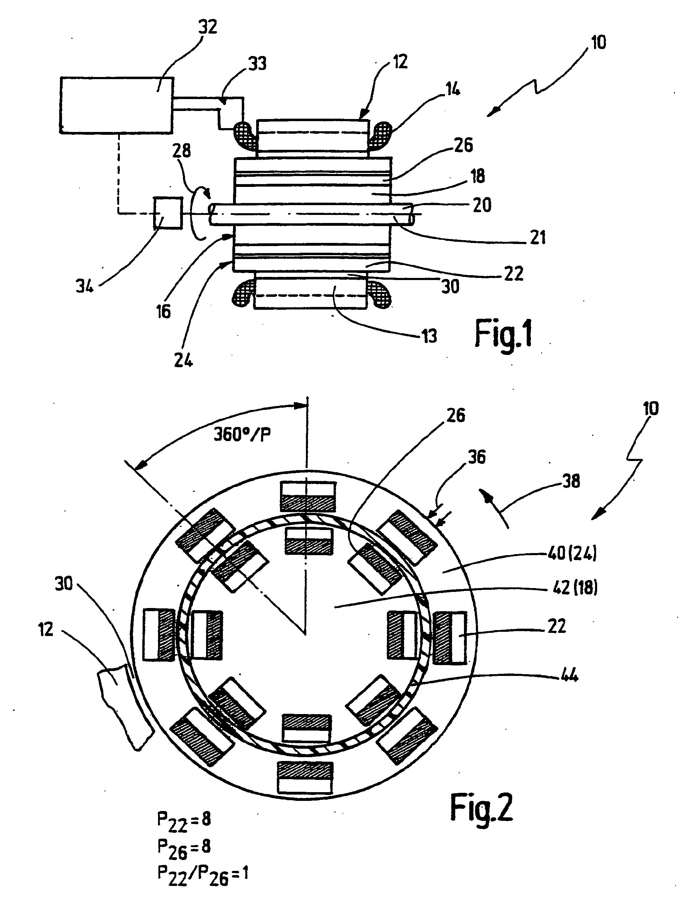

In Figur 1 ist eine erste Ausführungsform einer erfindungsgemäßen Synchronmaschine generell mit 10 bezeichnet.

Die Synchronmaschine 10 ist vorzugsweise als elektromotorischer Antrieb, beispielsweise in kraftfahrzeugtechnischen Anwendungen, ausgelegt. In diesem Umfeld kann sie als Aktuator verwendet werden, aber auch als Antriebseinheit, beispielsweise in Hybridantriebseinheiten, in reinen elektromotorischen Antriebseinheiten, etc.

Generell ist es jedoch auch denkbar, die Synchronmaschine 10 als elektrischen Generator zu nutzen.

Die Synchronmaschine 10 weist einen Stator 12 mit einem Statorjoch 13 auf, an dem eine Wicklungsanordnung 14 vorgesehen ist. Die Wicklungsanordnung 14 dient in an sich bekannter Weise zur Erzeugung eines Drehfeldes.

Die Synchronmaschine 10 weist ferner einen Rotor 16 auf. Der Rotor 16 beinhaltet ein Rotorjoch 18, das mit einer Welle 20 drehfest verbunden ist. Die Welle 20 ist entlang einer Achse 21 ausgerichtet. Der Stator 12 und der Rotor 16 sind konzentrisch zu dieser Achse 21 angeordnet.

Ferner ist um das Rotorjoch 18 herum ein weiterer Rotorabschnitt 24 vorgesehen. An dem weiteren Rotorabschnitt 24 sind erste Magnetflusserzeugungsmittel 22 ausgebildet.

Der um das Rotorjoch 18 herum vorgesehene Rotorabschnitt wird vorliegend als erster Rotorabschnitt bzw. "Hohlrotor" bezeichnet. Das Rotorjoch 18 wird vorliegend auch als zweiter Rotorabschnitt 18 bzw. "Vollrotor" bezeichnet.

Die Rotationsrichtung des so ausgebildeten Doppelrotors 16 in Bezug auf den Stator 12 ist in Figur 1 mit 28 bezeichnet. Ein zwischen dem Stator 12 und dem Rotor 16 vorgesehener ringförmiger Luftspalt ist mit 30 bezeichnet.

Die Wicklungsanordnung 14 des Stators 12 ist mit einer elektronischen Steuereinrichtung 32 verbunden, die die Wicklungsanordnung 14 in an sich bekannter Weise mit über der Zeit veränderlichen Strömen (Maschinenstrom 33) versorgt, um so ein Drehfeld zu erzeugen, das in Richtung 28 rotiert.

Die Welle 20 kann ferner mit einem Drehwinkelsensor 34 verbunden sein, der den jeweiligen Drehwinkel der Welle 20 (bzw. des Rotors 16) in Bezug auf den gehäusefesten Stator 12 misst. Der Drehwinkelsensor 34 kann mit der Steuereinrichtung 32 verbunden sein, so dass die Ansteuerung der Wicklungsanordnung 14 geregelt in Abhängigkeit von dem jeweiligen Drehwinkel (bzw. einer daraus abgeleiteten Größe die Winkelgeschwindigkeit) erfolgen kann.

Der erste Rotorabschnitt 24 und der zweite Rotorabschnitt 18 sind relativ zueinander beweglich, und zwar zwischen zumindest einer ersten und einer zweiten Relativposition.

Demzufolge kann ein von dem Rotor 16 insgesamt bereitgestellter Rotorfluss, mit dem das von der Wicklungsanordnung 14 erzeugte Drehfeld in Wechselwirkung tritt, verändert werden.

Insbesondere ist es so möglich, einen insgesamt hohen Rotorfluss zu erzeugen, so dass die Synchronmaschine 10 mit hohem Drehmoment arbeiten kann. Zum anderen ist es in der weiteren Relativposition möglich, den Rotorfluss zu verringern, so dass die Synchronmaschine mit hoher Drehzahl arbeiten kann.

Obgleich es bevorzugt ist, wenn die ersten Magnetflusserzeugungsmittel 22 durch eine Permanentmagnetanordnung gebildet werden, ist es auch möglich, stattdessen Gleichstromspulen vorzusehen, die über entsprechende Schleifringe gespeist werden.

Die zweiten Magnetflusserzeugungsmittel 26 dienen als Magnetflussbeeinflussungsmittel. Generell ist es auch möglich, die ersten Magnetflusserzeugungsmittel 22 durch nicht magnetische oder magnetisierbare Mittel zu beeinflussen, die am zweiten Rotorabschnitt 18 vorgesehen sind.

Vorzugsweise werden die zwei Rotorabschnitte 18, 24 gegeneinander verdreht, um die zwei Relativpositionen einzurichten. Es ist jedoch auch möglich, die Rotorabschnitte 18, 24 beispielsweise in axialer Richtung gegeneinander zu verschieben, oder beispielsweise an dem zweiten Rotorabschnitt 18 einzeln bewegliche Magnetflussbeeinflussungsmittel vorzusehen.

Der von dem Rotor 16 erzeugte Rotorfluss ist eine Größe, die abhängig ist von dem Produkt zwischen der in dem Luftspalt 30 erzeugten Flussdichte und der wirksamen Querschnittsfläche im Luftspalt.

Die Magnetflusserzeugungsmittel und die zugeordneten Magnetflussbeeinflussungsmittel (beispielsweise zweite Magnetflusserzeugungsmittel 26) können an den zwei Rotorabschnitten 18, 24 so angeordnet sein, dass sich in den zwei Relativpositionen jeweils eine unterschiedliche Flussdichte ergibt. Alternativ kann die Anordnung so sein, dass sich jeweils eine unterschiedliche Querschnittsfläche (wirksame Querschnittsfläche) ergibt.

Im Folgenden wird anhand Figur 2 eine Ausführungsform erörtert, bei der die Flussdichte verändert wird.

Figur 2 zeigt eine Ausführungsform einer erfindungsgemäßen Synchronmaschine, deren Aufbau generell dem in Figur 1 gezeigten Aufbau entspricht. Gleiche Elemente sind daher mit gleichen Bezugszeichen versehen. Im Folgenden werden lediglich die Unterschiede erläutert.

Die Synchronmaschine 10 der Figur 2 weist eine Doppelrotoranordnung auf, mit einem radial außenliegenden Hohlrotor 40 (erster Rotorabschnitt 24), und einem radial innenliegenden Vollrotor 42 (zweiter Rotorabschnitt 18).

Die zwei Rotorabschnitte 40, 42 sind durch eine nicht magnetische, reibungsarme Zwischenhülse 44 voneinander getrennt.

Man erkennt in Figur 2 ferner den in dem Luftspalt 30 wirkenden Rotorfluss 36. Ferner ist in Figur 2 ein Drehfeld 38 angedeutet, das von der Wicklungsanordnung 14 erzeugt wird.

Der Vollrotor 42 ist in Bezug auf den Hohlrotor 40 zwischen zwei Positionen bewegbar. Die zwei Relativpositionen, von denen in Figur 2 eine Position gezeigt ist, sind um 360°/p voneinander beabstandet, wobei p die Polzahl ist.

Bei der vorliegenden Ausführungsform weisen sowohl der Hohlrotor 40 als auch der Vollrotor 42 jeweils acht Pole auf (p₂₂ = p₂₆ = 8). Die zwei Relativpositionen sind daher um 45° voneinander beabstandet.

Die Pole der Rotorabschnitte 40, 42 sind jeweils gebildet durch Permanentmagnete, die in radialer Richtung magnetisiert sind. Dabei sind die Magnetpole der Permanentmagnetanordnungen 22, 26 in Umfangsrichtung jeweils alternierend vertauscht. In der dargestellten Relativposition liegen die einzelnen Permanentmagnete der Permanentmagnetanordnungen 22, 26 radial übereinander, wobei sie jeweils in gleicher Richtung gepolt sind. Daher überlagern sich die von den Permanentmagneten der Permanentmagnetanordnung 22, 26 erzeugten Magnetflüsse (addieren sich im Wesentlichen).

Sofern die zwei Rotorabschnitte 40, 42 gegeneinander in die zweite Relativposition verdreht werden, liegen die einzelnen Permanentmagnete der Permanentmagnetanordnungen 22, 26 wiederum radial übereinander, sind jedoch entgegengesetzt gepolt. Hierdurch überlagern sich die Magnetflüsse derart, dass in dem Luftspalt 30 insgesamt ein deutlich geringerer Rotorfluss 36 bereitgestellt wird.

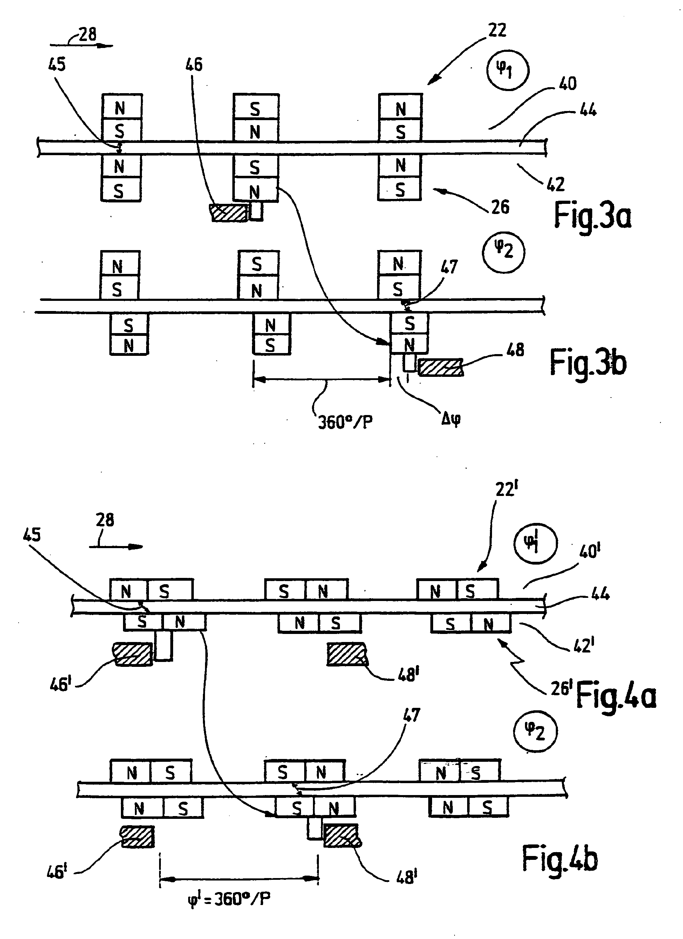

Dies wird im Folgenden anhand von Figur 3 näher erläutert.

Figur 3a zeigt dabei eine Anordnung, wie sie in Figur 2 gezeigt ist, und zwar mit einer ersten Relativposition ϕ₁. In dieser Position sind die einander gegenüberliegenden Pole der Permanentmagnete der Permanentmagnetanordnungen 22, 26 entgegengesetzt, so dass dazwischen magnetische Anziehungskräfte 45 wirken. Demzufolge wird diese Relativposition ϕ₁ aufgrund dieser Kräfte 45 generell aufrechterhalten, selbst wenn von außen keine Energie zugeführt wird. Bei 46 ist ein mechanischer Anschlag gezeigt, der jedoch nicht unbedingt erforderlich ist.

In Figur 3b sind die zwei Rotorabschnitte 40, 42 gegeneinander verdreht, und zwar um einen Winkel von insgesamt 360°/p+Δϕ.

Man erkennt, dass in dieser Anordnung sich im Wesentlichen gleiche Magnetpole der Permanentmagnetanordnungen 22, 26 gegenüberliegen. Daher werden zwischen diesen Magnetpolen magnetische Abstoßungskräfte 47 erzeugt.

Generell ist es zwar auch denkbar, die zweite Relativposition ϕ₂ so einzurichten, dass sich die einzelnen Permanentmagnete jeweils genau gegenüberliegen (in diesem Fall wäre der Winkelversatz nur 360°/p). In diesem Fall wären jedoch, wenn man auf eine weitere Energiezufuhr während des Dauerbetriebes verzichten möchte, mechanische Rastmittel notwendig, die verhindern, dass die magnetischen Abstoßungskräfte 47 die eingestellte Position verändern.

Bei der in Figur 3b dargestellten Ausführungsform ist durch den kleinen zusätzlichen Winkelversatz Δϕ eine Art magnetische Rasteinrichtung realisiert.

Es ist ein mechanischer Anschlag 48 vorgesehen, der der Winkelposition 360°/p+Δϕ entspricht. In dieser Position sind die resultierenden magnetischen Abstoßungskräfte 47 schräg ausgerichtet und beinhalten eine in Umfangsrichtung wirkende Kraftkomponente, die den Vollrotor 42 gegen den mechanischen Anschlag 48 drückt.

Demzufolge wird trotz der gegenüberliegenden gleichen Magnetpole die so eingestellte Relativposition ϕ₂ auch im Dauerbetrieb ohne weitere Energiezufuhr aufrechterhalten.

In Figur 4 ist eine alternative Ausführungsform einer Doppelrotoranordnung gezeigt, wobei die Darstellung jener der Figur 3 entspricht. Ein Hohlrotor 40' weist eine Permanentmagnetanordnung 22' auf, bei der einzelne Permanentmagnete so festgelegt sind, dass ihre magnetischen Achsen in Umfangsrichtung (Drehrichtung 28) weisen.

Die Permanentmagnete der Permanentmagnetanordnung 26' an dem Vollrotor 42' sind in entsprechender Weise festgelegt.

Im vorliegenden Fall sind ferner zwei mechanische Anschläge 46', 48' vorgesehen, die einen Versatzwinkelbereich ϕ' von genau 360°/p einrichten.

In der in Figur 4a gezeigten Position, bei der einander entgegengesetzte Magnetpole gegenüberliegen, wirken die magnetischen Anziehungskräfte so, dass der Vollrotor 42' gegen den mechanischen Anschlag 46' gezogen wird. Daher wird eine definierte Relativposition ϕ₁' eingerichtet. Die etwas geringere Überdeckung wird hierbei in Kauf genommen.

In der zweiten Relativposition ϕ₂ (Fig. 4b) ist der zweite mechanische Anschlag 48' genauso vorgesehen wie bei der Ausführungsform der Figur 3b, so dass eine magnetische Rasteinrichtung realisiert wird.

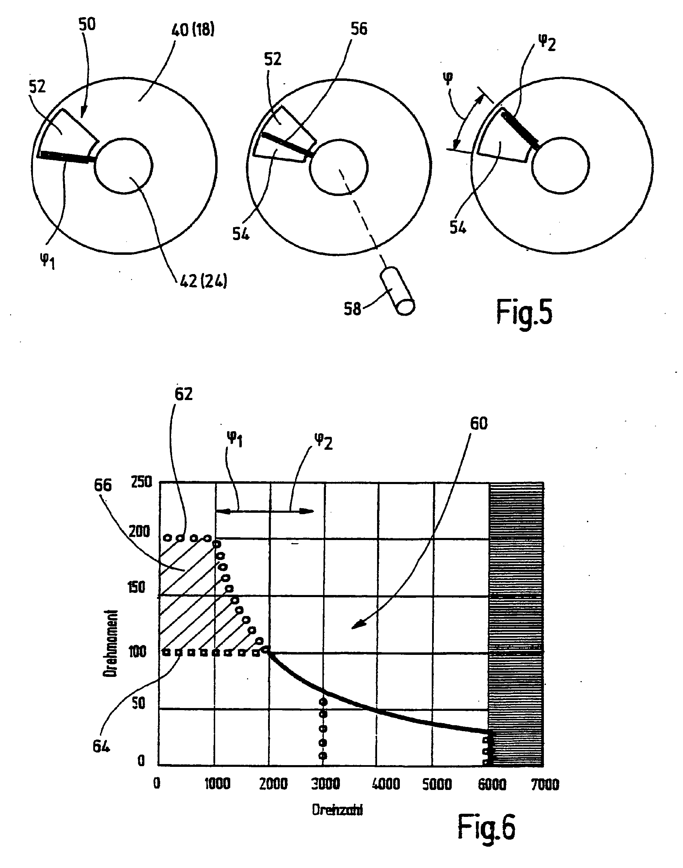

Figur 5 zeigt ein Beispiel eines Aktuators zum Verdrehen des Vollrotors 42 in Bezug auf den Hohlrotor 40. Der Aktuator 50 ist als Fluiddrehsteller ausgebildet und beinhaltet eine erste Kammer 52 und eine zweite Kammer 54, die durch einen Drehkolben 56 voneinander getrennt sind. Der Drehkolben 56 ist an dem Vollrotor 42 festgelegt. Durch Zuführen von Fluid in die erste Kammer 52 wird die erste Relativposition ϕ₁ eingerichtet. Wenn man Fluid in die zweite Kammer 54 zuführt, wird der Vollrotor 42 in die in Figur 5 rechts gezeigte Position verdreht (zweite Relativposition ϕ₂).

Eine Mittenposition ist in Figur 5 in der Mitte gezeigt. Solche mittleren Positionen werden im Rahmen der vorliegenden Erfindung vorzugsweise nicht verwendet.

Bei 58 ist ein alternativer Rotoraktuator 58 in Form eines elektrischen Motors gezeigt, der mit dem Vollrotor 42 verbunden ist.

Figur 6 zeigt in schematischer Form eine Kennlinie 60 von Drehmoment über Drehzahl einer erfindungsgemäßen Synchronmaschine 10.

Die Kennlinie 60 setzt sich im Wesentlichen aus zwei Teilkennlinien 62, 64 zusammen.

Die Teilkennlinie 62 entspricht der Kennlinie einer herkömmlichen Synchronmaschine, die auf hohes Drehmoment optimiert ist. Man erkennt, dass die Kennlinie 62 bereits bei einer relativ niedrigen Drehzahl (beispielsweise 3.000 Umdrehungen/Minute) abbricht. Eine herkömmliche Synchronmaschine mit einem derart hohen Anfangsdrehmoment ist für höhere Drehzahlen in der Regel nicht geeignet.

Die zweite Kennlinie 64 besitzt ein deutlich geringeres Anfangsdrehmoment, ist jedoch bis hin zu relativ hohen Drehzahlen (beispielsweise 6.000 Umdrehungen/Minute) verwendbar.

Die erfindungsgemäße Synchronmaschine 10 kann nun eine Kennlinie 60 realisieren, die sich in vorteilhafter Weise aus den beiden Teilkennlinien 62, 64 zusammensetzt. In einem Bereich unterhalb einer bestimmten Drehzahlgrenze (beispielsweise 2.000 Umdrehungen/Minute) wird eine erste Relativposition ϕ₁ eingerichtet, so dass ein hoher Rotorfluss 36 bereitgestellt wird und sich ein hohes Drehmoment realisieren lässt. Der in diesem Bereich erzielte Drehmomentüberschuss ist in Figur 6 schematisch angedeutet (Schraffur 66).

Oberhalb der bestimmten Drehzahlgrenze wird die Relativlage der zwei Rotorabschnitte verändert (neue Position (ϕ₂).

Hierdurch wird der Rotorfluss 36 verringert und die Synchronmaschine 10 ist generell auch für hohe Drehzahlen verwendbar, beispielsweise bis hin zu dem gezeigten Beispiel im Wert von 6.000 Umdrehungen/Minute.

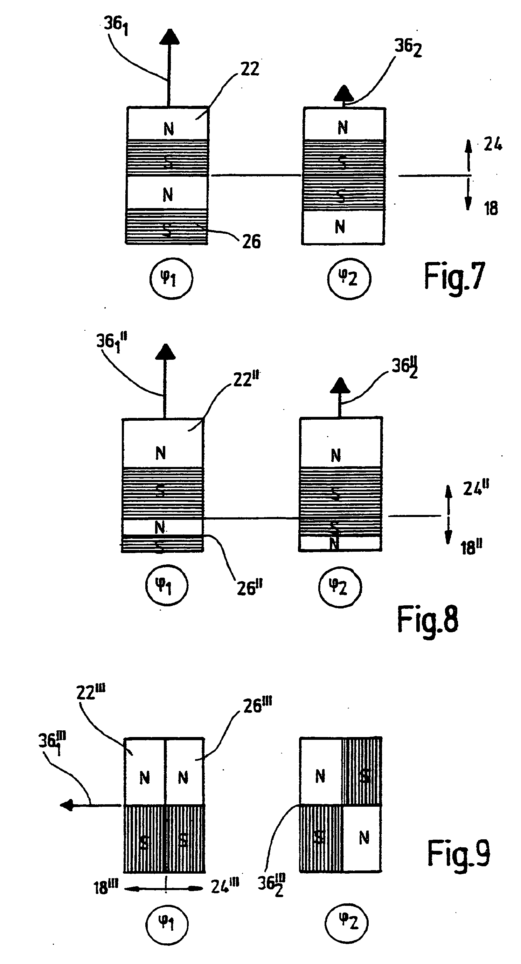

Anhand der folgenden schematischen Figuren 7 bis 9 wird noch einmal erläutert, wie der unterschiedliche Rotorfluss zustande kommt.

In Figur 7 ist dies anhand der Synchronmaschine 10 der Figur 2 gezeigt.

In der ersten Relativposition ϕ₁ (Figur 7 links) addieren sich die Magnetflüsse der Permanentmagnetanordnungen 22, 26 zu einem relativ hohen Rotorfluss 36₁. In der zweiten Relativposition ϕ₂ löschen sich die Magnetflüsse der Permanentmagnetanordnungen 22, 26 aufgrund der wechselgepolten Anordnung teilweise aus, so dass ein deutlich geringerer Rotorfluss 36₂ bereitgestellt wird.

In Figur 8 ist eine alternative Ausführungsform gezeigt, bei der an dem ersten Rotorabschnitt 24" vergleichsweise große Permanentmagnete vorgesehen sind, und an dem zweiten Rotorabschnitt 18" vergleichsweise kleine Permanentmagnete.

Demzufolge kann in der ersten Relativposition ϕ₁ insgesamt wiederum ein hoher Rotorfluss 36₁" bereitgestellt werden. In der zweiten Relativposition ϕ₂ kann ein verringerter Rotorfluss 36₂" bereitgestellt werden, der jedoch nicht so deutlich geringer ist wie in dem Fall der Figur 7.

Es versteht sich generell, dass hier eine beliebige Kombination von Größe, Magnetstärken der einzelnen Permanentmagnete, der Materialien der verwendeten Permanentmagnete, etc. möglich ist, um ein geeignetes Verhalten der Synchronmaschine 10 in den zwei Relativpositionen ϕ₁, ϕ₂ zu erzielen.

Figur 9 zeigt eine weitere alternative Ausführungsform, deren Aufbau im Wesentlichen dem Aufbau der Figur 4 entspricht.

Man erkennt, dass in der einen Position (entsprechend Figur 4a) ein relativ hoher Rotorfluss 36₁''' bereitgestellt werden kann.

In der zweiten Relativposition ϕ₂ löschen sich die Wirkungen der Permanentmagnetanordnungen 22"', 26"' im Wesentlichen aus, so dass der bereitgestellte Rotorfluss 36₂'" gegen Null geht.

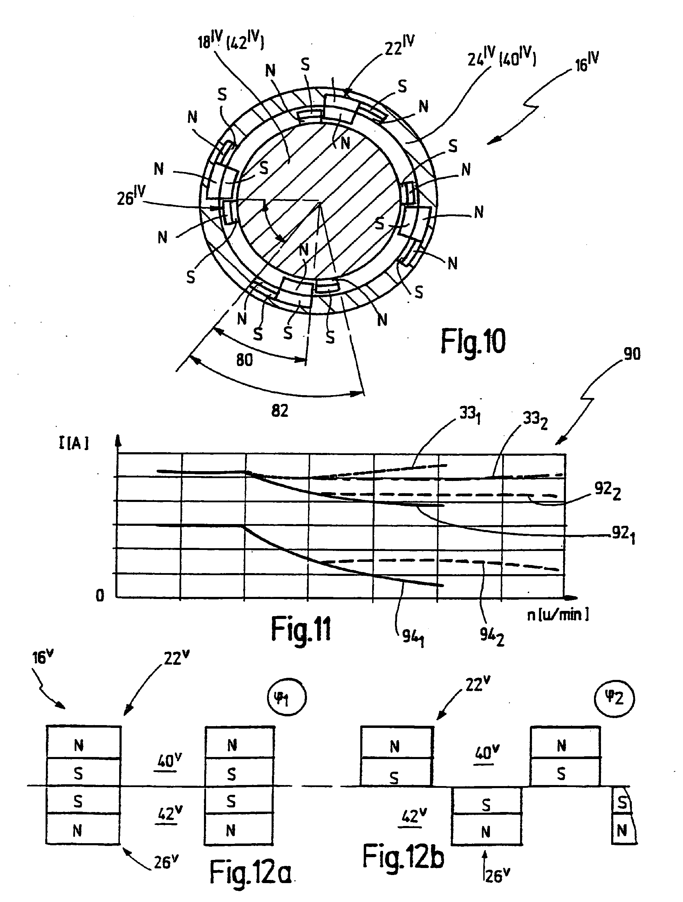

Figur 10 zeigt eine der Figur 2 vergleichbare Darstellung einer weiteren alternativen Ausführungsform einer Doppelrotoranordnung 16^{IV}.

Die Doppelrotoranordnung 16^{IV} weist ein Rotorjoch 18^{IV} bzw. einen Vollrotor 42^{IV} sowie einen ersten Rotorabschnitt 24^{IV} bzw. einen Hohlrotor 40^{IV} auf.

An dem Hohlrotor 40^{IV} sind erste Magnetflusserzeugungsmittel 22^{IV} ausgebildet. Diese beinhalten erste Magnete, die in einen Spalt zwischen Hohlrotor 40^{IV} und Vollrotor 42^{IV} ragen, und zweite Magnete, die in Umfangsrichtung daneben angeordnet sind und nicht in den Spalt ragen.

An dem Außenumfang des Vollrotors 42^{IV} sind jeweils Magnete angeordnet, die ebenfalls in den Spalt hineinragen.

In einer ersten (nicht dargestellten) Position liegen die Magnete des Vollrotors 42^{IV} in radialer Richtung ausgerichtet mit den zweiten Magneten des Hohlrotors 40^{IV}. Hierbei wird eine vergleichsweise kleine erste Polbreite 80 in Umfangsrichtung eingerichtet.

In der dargestellten zweiten Relativposition sind die Rotorabschnitte 40^{IV}, 42^{IV} derart gegeneinander verdreht, dass die Magnete des Vollrotors 42^{IV} benachbart liegen zu jeweils einem in Umfangsrichtung versetzt angeordneten ersten Magneten der Magnetflusserzeugungsmittel 22^{IV} des Hohlrotors 40^{IV}. In dieser zweiten Relativposition wird eine zweite, breitere Polbreite 82 eingerichtet.

Bei dieser Ausführungsform einer Doppelrotoranordnung 16^{IV} kann der Rotorfluss folglich durch Verändern der Luftspaltfläche verändert werden, die in einem Fall bspw. der ersten Polbreite 80 und im anderen Fall bspw. der zweiten Polbreite 82 entspricht.

Zudem ist anzumerken, dass die Polung der Magnetflusserzeugungsmittel 22^{IV} und der Magnetflusserzeugungsmittel 26^{IV} wie dargestellt gewählt sein kann, wobei ein größerer Rotorfluss in der Stellung mit der größeren Polbreite 82 eingerichtet wird. In der Stellung mit der ersten Polbreite 80 wird insgesamt ein geringerer Rotorfluss bereitgestellt, da die Magnete des Vollrotors 42^{IV} und der radial damit ausgerichteten zweiten Magnete des Hohlrotors 40^{IV} entgegengesetzt gepolt sind.

Mit einer anderen Polung kann jedoch auch ein entgegengesetzter Effekt erzielt werden.

In Figur 11 ist dargestellt, wie die elektrischen Ströme der elektrischen Synchronmaschine 10 gemäß der vorliegenden Erfindung durch mechanische Feldschwächung, also auf Grund mechanischer Verstellung des Rotors 16 verändert werden können. In dem in Figur 11 gezeigten Diagramm 90 sind zum einen der Motorstrom 33₁ in einer ersten Relativposition und der Motorstrom 33₂ in einer zweiten Relativposition (mit Feldschwächung auf Grund mechanischer Verstellung) dargestellt.

In entsprechender Weise sind im Diagramm 90 ein momentenbildender Strom ohne (92₁) und mit (92₂) mechanisch eingestellter Feldschwächung dargestellt, sowie ein feldbildender Strom 94₁ ohne Feldschwächung und mit Feldschwächung (94₂) dargestellt.

In Figur 12 ist eine weitere Ausführungsform einer Doppelrotoranordnung 16^{V} für eine elektrische Synchronmaschine gemäß der vorliegenden Erfindung dargestellt.

Figur 12a zeigt dabei eine erste Relativposition ϕ₁ und Figur 12b zeigt eine zweite Relativposition ϕ₂.

Die Magnetflusserzeugungsmittel 22^{V} des Hohlrotors 40^{V} und die Magnetflusserzeugungsmittel 26^{V} des Vollrotors 42^{V} sind so angeordnet, dass sie in einer ersten Position radial miteinander ausgerichtet sind und dabei jeweils entgegengesetzt gepolt sind, so dass die so eingerichteten Pole jeweils geschwächt sind. Dabei sind bspw. in Umfangsrichtung jeweils zwei benachbarte Pole gleichgepolt, wie es in Fig. 12a dargestellt ist.

In einer zweiten Position (Fig. 12b) sind die Rotorabschnitte 40^{V}, 42^{V} gegeneinander so versetzt, dass die Polzahl des Rotors 16^{V} insgesamt verdoppelt wird. Denn in der zweiten Relativposition liegen die Magnete der Magnetflusserzeugungsmittel 26^{V} jeweils zwischen den Magneten der Magnetflusserzeugungsmittel 22^{V}, so dass die Polzahl verdoppelt wird.

Auf diese Weise kann mit einem Doppelrotor 16^{V} die effektive Polzahl eingestellt werden.

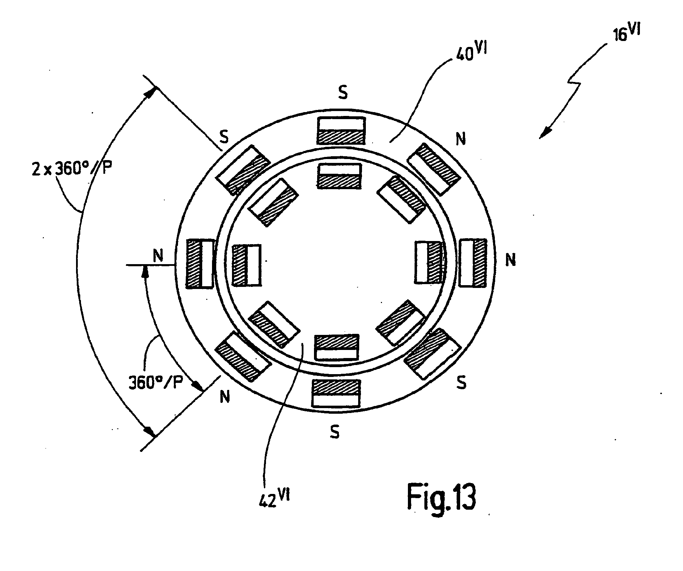

Eine weitere solche Variante mit einer Doppelrotoranordnung 16^{VI} mit Polzahlverstellung ist in Fig. 13 gezeigt.

Bei dieser Ausführungsform werden die Pole von Hohlrotor und Vollrotor in beiden Relativpositionen radial miteinander ausgerichtet. In einer ersten (dargestellten) Relativposition sind die Magnete jeweils gleichgepolt, so dass die Pole sämtlich ungeschwächt sind. Die Polfolge ist in Umfangsrichtung N-N-S-S-N-N-S-S, so dass effektiv nur 4 Pole eingerichtet sind (jeweils gebildet durch ein Polpaar).

In der zweiten Relativposition, wenn die Pole um 360°/p gegeneinander verdreht werden, verbleiben manche Pole ungeschwächt, die anderen werden geschwächt. Die Polfolge ist N-s-S-n-N-s-S-n, wobei kleine Buchstaben jeweils einen geschwächten (bis hin zu einem nicht mehr wahrnehmbaren) Rotorfluss angeben.

Wenn man eine zweite Relativposition einrichtet, indem die Rotorabschnitte um 2*360°/p verdreht werden, würde sich eine Polfolge n-s-n-s-n-s-n-s ergeben. Sämtliche Pole wären geschwächt. Die Polzahl wäre jedoch verdoppelt.

Insgesamt gilt für sämtliche oben beschriebenen Ausführungsformen, dass die Permanentmagnete der Permanentmagnetanordnung 26 des Vollrotors 42 radial von außen in Vertiefungen eingelegt werden können. Eine Bandage, wie sie bei herkömmlichen EC-Maschinen für den Rotor notwendig ist, ist für den Vollrotor 42 nicht notwendig, da die Zwischenhülse 44 und der um die Zwischenhülse 44 herum angeordnete Hohlrotor 40 verhindern, dass die Permanentmagnete der Anordnung 26 radial herausgeschleudert werden.

Der oben genannte kleine Versatzwinkel Δϕ kann im Bereich von 0,5 bis 10° liegen, vorzugsweise im Bereich von 1 bis 4°.

Als Rotoraktuator eignen sich Fluidsteller oder elektrische Verstellaktuatoren, wie sie beispielsweise auch im zum Bereich der Nockenwellenverstellung oder Propellerverstellung bekannt sind.

## Patentansprüche

1. Elektrische Synchronmaschine (10), insbesondere zur Verwendung als Antriebseinheit in kraftfahrzeugtechnischen Anwendungen, mit einem Stator (12), der eine elektrische Wicklungsanordnung (14) zur Erzeugung eines Drehfeldes (38) aufweist, und mit einem Rotor (16), der Magnetflusserzeugungsmittel (22, 26) zum Erzeugen eines Rotorflusses (36) aufweist, mit dem das Drehfeld (38) in Wechselwirkung tritt, wobei der Rotor (16) einen ersten Rotorabschnitt (24) mit ersten Magnetflusserzeugungsmitteln (22) und einen zweiten Rotorabschnitt (18) mit Magnetflussbeeinflussungsmitteln (26) aufweist, wobei die zwei Rotorabschnitte (24, 18) zwischen wenigstens einer ersten und einer zweiten Relativposition (ϕ₁,ϕ₂) relativ zueinander bewegbar sind, derart, dass der von dem Rotor (16) bereitgestellte Rotorfluss (36) in den zwei Relativpositionen (ϕ₁,ϕ₂) unterschiedlich groß ist, und wobei sich in einer (ϕ₂) der zwei Relativpositionen (ϕ₁,ϕ₂) identische Magnetpole des ersten bzw. des zweiten Rotorabschnittes (24, 18) gegenüberliegen,
**dadurch gekennzeichnet, dass** ein für diese Relativposition (ϕ₂) eingerichteter mechanischer Endanschlag (48) um einen kleinen Winkelbetrag (Δϕ) versetzt angeordnet ist, so dass sich die identischen Magnetpole nicht exakt gegenüberliegen und die magnetischen Abstossungskräfte (47) einen Rotorabschnitt gegen den Endanschlag (48) drücken.

2. Elektrische Synchronmaschine nach Anspruch 1, **dadurch gekennzeichnet, dass** die Magnetflussbeeinflussungsmittel (26) des zweiten Rotorabschnittes (18) durch zweite Magnetflusserzeugungsmittel (26) gebildet sind.

3. Elektrische Synchronmaschine nach Anspruch 2, **dadurch gekennzeichnet, dass** die Magnetflusserzeugungsmittel (22, 26) jeweils eine Permanentmagnetanordnung (22, 26) aufweisen, wobei die Permanentmagnetanordnungen (22, 26) so an dem ersten bzw. zweiten Rotorabschnitt (24, 18) angeordnet sind, dass der Rotorfluss (36) bei der Relativbewegung durch Verändern der Flussdichte verändert wird.

4. Elektrische Synchronmaschine nach Anspruch 2, **dadurch gekennzeichnet, dass** die Magnetflusserzeugungsmittel (22, 26) jeweils eine Permanentmagnetanordnung (22, 26) aufweisen, wobei die Permanentmagnetanordnungen (22, 26) so an dem ersten bzw. zweiten Rotorabschnitt (24, 18) angeordnet sind, dass der Rotorfluss (36) bei der Relativbewegung durch Verändern der Luftspaltfläche (72) verändert wird.

5. Elektrische Synchronmaschine nach einem der Ansprüche 1 bis 4, **dadurch gekennzeichnet, dass** der erste Rotorabschnitt (24) und der zweite Rotorabschnitt (18) radial ineinander verschachtelt angeordnet sind.

6. Elektrische Synchronmaschine nach einem der Ansprüche 1 bis 5, **dadurch gekennzeichnet, dass** die erste bzw. die zweite Relativposition (ϕ₁,ϕ₂) eingerichtet werden, indem der erste und der zweite Rotorabschnitt (24, 18) gegeneinander verdreht werden.

7. Elektrische Synchronmaschine nach einem der Ansprüche 1 bis 6, **dadurch gekennzeichnet, dass** der erste und der zweite Rotorabschnitt (24, 18) jeweils Magnetflusserzeugungsmittel (22, 26) mit einer ersten bzw. zweiten Anzahl (p) von Polen aufweisen, deren Quotient (p22/p26) eine ganze Zahl ist.

8. Elektrische Synchronmaschine nach Anspruch 7, **dadurch gekennzeichnet, dass** der erste und der zweite Rotorabschnitt (24, 18) um einen Winkel (360°/p) gegeneinander verdrehbar sind, der kleiner gleich 360° geteilt durch die größere bzw. gemeinsame Polzahl (p) ist.

9. Elektrische Synchronmaschine nach einem der Ansprüche 1 bis 8, **gekennzeichnet durch** einen Rotoraktuator (50), der die Relativbewegung zwischen den zwei Rotorabschnitten (24, 18) erzeugt.

10. Elektrische Synchronmaschine nach einem der Ansprüche 1 bis 9, **dadurch gekennzeichnet, dass** der erste und der zweite Rotorabschnitt (24, 18) zumindest in einer der zwei Relativpositionen (ϕ₁,ϕ₂) mittels einer Rasteinrichtung (47, 48) gehalten sind.

11. Elektrische Synchronmaschine nach einem der Ansprüche 1 bis 10, **dadurch gekennzeichnet, dass** sich in einer (ϕ₁) der zwei Relativpositionen (ϕ₁,ϕ₂) entgegengesetzte Magnetpole des ersten bzw. des zweiten Rotorabschnittes (24, 18) gegenüberliegen, so dass die Rotorabschnitte aufgrund der magnetischen Anziehungskräfte (45) in dieser Relativposition gehalten werden.

12. Elektrische Synchronmaschine nach einem der Ansprüche 1 bis 11, **dadurch gekennzeichnet, dass** zwischen dem ersten und dem zweiten Rotorabschnitt (24, 18) ein Zwischenglied (44) aus einem nicht-magnetischen reibungsarmen Material angeordnet ist.

13. Elektrische Synchronmaschine nach Anspruch 12, **dadurch gekennzeichnet, dass** das Zwischenglied eine Zwischenhülse (44) ist.

14. Elektrische Synchronmaschine nach einem der Ansprüche 1 bis 13, **dadurch gekennzeichnet, dass** die ersten und/oder die zweiten Magnetflusserzeugungsmittel (22^{V}, 26^{V}) so ausgebildet sind, dass eine Gesamtpolzahl des Rotors (16^{V}; 16^{VI}) verstellbar ist.

## Claims

1. An electrical synchronous machine (10), in particular for use as a drive unit in motor vehicle applications, comprising a stator (12) which has an electrical winding arrangement (14) for generating a rotating field (38), and comprising a rotor (16) which has magnetic flux generating means (22, 26) for generating a rotor flux (36) with which the rotating field (38) interacts, wherein the rotor (16) has a first rotor section (24) with first magnetic flux generating means (22) and a second rotor section (18) with magnetic flux influencing means (26), it being possible to move the two rotor sections (24, 18) relative to one another between at least a first and a second relative position (ϕ₁, (ϕ₂) in such a way that the rotor flux (36) provided by the rotor (16) has a different magnitude in the two relative positions (ϕ₁, ϕ₂), and wherein identical magnet poles of the first and, respectively, of the second rotor section (24, 18) are situated opposite one another in one (ϕ₂) of the two relative positions (ϕ₁, ϕ₂),
**characterized in that** a mechanical end stop (48) which is designed for this relative position (ϕ₂) is arranged offset through a small angle (Δϕ), so that the identical magnet poles are not situated exactly opposite one another and the magnetic repulsion forces (47) push one rotor section against the end stop (48).

2. The electrical synchronous machine as claimed in claim 1, **characterized in that** the magnetic flux influencing means (26) of the second rotor section (18) are formed by second magnetic flux generating means (26).

3. The electrical synchronous machine as claimed in claim 2, **characterized in that** the magnetic flux generating means (22, 26) each have a permanent magnet arrangement (22, 26), wherein the permanent magnet arrangements (22, 26) are arranged on the first and, respectively, second rotor section (24, 18) such that the rotor flux (36) is changed during the relative movement by changing the flux density.

4. The electrical synchronous machine as claimed in claim 2, **characterized in that** the magnetic flux generating means (22, 26) each have a permanent magnet arrangement (22, 26), wherein the permanent magnet arrangements (22, 26) are arranged on the first and, respectively, second rotor section (24, 18) such that the rotor flux (36) is changed during the relative movement by changing the air gap area (72).

5. The electrical synchronous machine as claimed in one of claims 1 to 4, **characterized in that** the first rotor section (24) and the second rotor section (18) are arranged so as to be radially interleaved.

6. The electrical synchronous machine as claimed in one of claims 1 to 5, **characterized in that** the first and the second relative positions (ϕ₁, ϕ₂) are set up by the first and the second rotor sections (24, 18) being rotated with respect to one another.

7. The electrical synchronous machine as claimed in one of claims 1 to 6, **characterized in that** the first and the second rotor sections (24, 18) each have magnetic flux generating means (22, 26) with a first and, respectively, second number (p) of poles whose quotient (p22/p26) is an integer.

8. The electrical synchronous machine as claimed in claim 7, **characterized in that** the first and the second rotor sections (24, 18) can be rotated with respect to one another through an angle (360°/p) which is less than or equal to 360° divided by the larger or common pole number (p).

9. The electrical synchronous machine as claimed in one of claims 1 to 8, **characterized by** a rotor actuator (50) which generates the relative movement between the two rotor sections (24, 18).

10. The electrical synchronous machine as claimed in one of claims 1 to 9, **characterized in that** the first and the second rotor section (24, 18) are held at least in one of the two relative positions (ϕ₁, ϕ₂) by means of a latching device (47, 48).

11. The electrical synchronous machine as claimed in one of claims 1 to 10, **characterized in that** opposed magnet poles of the first and, respectively, of the second rotor section (24, 18) are situated opposite one another in one (ϕ₁) of the two relative positions (ϕ₁, ϕ₂), so that the rotor sections are held in this relative position on account of the magnetic attraction forces (45).

12. The electrical synchronous machine as claimed in one of claims 1 to 11, **characterized in that** an intermediate element (44) comprising a non-magnetic, low-friction material is arranged between the first and the second rotor section (24, 18).

13. The electrical synchronous machine as claimed in claim 12, **characterized in that** the intermediate element is an intermediate sleeve (44).

14. The electrical synchronous machine as claimed in one of claims 1 to 13, **characterized in that** the first and/or the second magnetic flux generating means (22^{V}, 26^{V}) are formed such that the total pole number of the rotor (16^{V}; 16^{VI}) can be adjusted.

## Revendications

1. Machine synchrone électrique (10), en particulier pour l'utilisation en tant qu'unité d'entraînement dans des applications techniques automobiles, comprenant un stator (12) qui présente un agencement d'enroulement électrique (14) pour générer un champ tournant (38), comprenant un rotor (16), qui présente des moyens de génération de flux magnétique (22, 26) pour générer un flux rotorique (36), avec lequel le champ tournant (38) entre en interaction, le rotor (16) présentant une première portion de rotor (24) avec des premiers moyens de génération de flux magnétique (22) et une deuxième portion de rotor (18) avec des moyens influençant le flux magnétique (26), les deux portions de rotor (24, 18) pouvant être déplacées l'une par rapport à l'autre entre au moins une première et une deuxième position relative (ϕ₁, ϕ₂), de telle sorte que le flux rotorique (36) fourni par le rotor (16) ait une intensité différente dans les deux positions relatives (ϕ₁, ϕ₂) et des pôles magnétiques identiques dans une (ϕ₂) des deux positions relatives (ϕ₁, ϕ₂) de la première ou de la deuxième portion de rotor (24, 18) étant opposés,
**caractérisée en ce qu'**une butée de fin de course mécanique (48) prévue pour cette position relative (ϕ₂) est disposée de manière décalée d'une petite valeur angulaire (Δϕ), de telle sorte que les pôles magnétiques identiques ne soient pas exactement opposés et que les forces de répulsion magnétique (47) pressent une portion de rotor contre la butée de fin de course (48).

2. Machine synchrone électrique selon la revendication 1, **caractérisée en ce que** les moyens influençant le flux magnétique (26) de la deuxième portion de rotor (18) sont formés par des deuxièmes moyens de génération de flux magnétique (26).

3. Machine synchrone électrique selon la revendication 2, **caractérisée en ce que** les moyens de génération de flux magnétique (22, 26) présentent à chaque fois un agencement d'aimants permanents (22, 26), les agencements d'aimants permanents (22, 26) étant disposés sur la première, respectivement la deuxième, portion de rotor (24, 18) de telle sorte que le flux rotorique (36) soit modifié lors du mouvement relatif par variation de la densité de flux.

4. Machine synchrone électrique selon la revendication 2, **caractérisée en ce que** les moyens de génération de flux magnétique (22, 26) présentent à chaque fois un agencement d'aimants permanents (22, 26), les agencements d'aimants permanents (22, 26) étant disposés sur la première, respectivement la deuxième, portion de rotor (24, 18), de telle sorte que le flux rotorique (36) soit modifié lors du mouvement relatif par variation de la surface d'entrefer (72).

5. Machine synchrone électrique selon l'une quelconque des revendications 1 à 4, **caractérisée en ce que** la première portion de rotor (24) et la deuxième portion de rotor (18) sont disposées de manière emboîtée radialement l'une dans l'autre.

6. Machine synchrone électrique selon l'une quelconque des revendications 1 à 5, **caractérisée en ce que** la première, respectivement la deuxième, position relative (ϕ₁, ϕ₂) sont prévues de manière à ce que la première et la deuxième portion de rotor (24, 18) soient tournées l'une par rapport à l'autre.

7. Machine synchrone électrique selon l'une quelconque des revendications 1 à 6, **caractérisée en ce que** la première et la deuxième portion de rotor (24, 18) présentent à chaque fois des moyens de génération de flux magnétique (22, 26) avec un premier, respectivement un deuxième, nombre (p) de pôles, dont le quotient (p22/p26) est un nombre entier.

8. Machine synchrone électrique selon la revendication 7, **caractérisée en ce que** la première et la deuxième portion de rotor (24, 18) peuvent être tournées l'une par rapport à l'autre d'un angle (360°/p) qui est inférieur ou égal à 360° divisé par le nombre plus important ou commun de pôles (p).

9. Machine synchrone électrique selon l'une quelconque des revendications 1 à 8, **caractérisée par** un actionneur de rotor (50) qui génère le mouvement relatif entre les deux portions de rotor (24, 18).

10. Machine synchrone électrique selon l'une quelconque des revendications 1 à 9, **caractérisée en ce que** la première et la deuxième portion de rotor (24, 18) sont retenues au moins dans l'une des deux positions relatives (ϕ₁, ϕ₂) au moyen d'un dispositif d'encliquetage (47, 48).

11. Machine synchrone électrique selon l'une quelconque des revendications 1 à 10, **caractérisée en ce que** dans l'une (ϕ₁) des deux positions relatives (ϕ₁, ϕ₂), des pôles magnétiques opposés de la première, respectivement de la deuxième, portion de rotor (24, 18) sont opposés de telle sorte que les portions de rotor soient retenues dans cette position relative sous l'effet des forces d'attraction magnétiques (45).

12. Machine synchrone électrique selon l'une quelconque des revendications 1 à 11, **caractérisée en ce qu'**entre la première et la deuxième portion de rotor (24, 18) est disposé un organe intermédiaire (44) en un matériau à faible friction non magnétique.

13. Machine synchrone électrique selon la revendication 12, **caractérisée en ce que** l'organe intermédiaire est une douille intermédiaire (44).

14. Machine synchrone électrique selon l'une quelconque des revendications 1 à 3, **caractérisée en ce que** les premiers et/ou les deuxièmes moyens de génération de flux magnétique (22^{V}, 26^{V}) sont réalisés de telle sorte qu'un nombre de pôles total du rotor (16^{V} ; 16^{VI}) puisse être réglé.
